# EUROPEAN PATENT SPECIFICATION

(11) **EP 4 328 106 B1**
(45) Date of publication and mention of the grant of the patent: **04.03.2026**
(21) Application number: 23191867.3
(22) Date of filing: 17.08.2023
(51) Int. Cl.: B61B 12/06, G06T 7/00, G06V 10/70, G06V 20/00

(54) **EVENT ANALYSIS SYSTEM AND METHOD FOR A CABLE TRANSPORT SYSTEM**
EREIGNISANALYSESYSTEM UND VERFAHREN FÜR EIN KABELTRANSPORTSYSTEM
SYSTÈME ET PROCÉDÉ D'ANALYSE D'ÉVÉNEMENT POUR UN SYSTÈME DE TRANSPORT PAR CÂBLE

(30) Priority: 23.08.2022 IT 202200017499
(43) Date of publication of application: 28.02.2024
(73) Proprietor: LEITNER S.p.A., 39049 Vipiteno (BZ) (IT)
(72) Inventor: GOGL, Matthias, 39049 Vipiteno (BZ) (IT); KERNBICHLER, Martin, 6410 Telfs (AT)
(74) Representative: Studio Torta S.p.A.

(56) References cited:
- US-A1- 2018 162 417
- US-A1- 2021 182 563

## Description

### CROSS-REFERENCE TO RELATED APPLICATIONS

This patent application claims priority from Italian patent application no. 102022000017499 filed on August 23, 2022.

### TECHNICAL SECTOR

This invention relates to an event analysis system and method for a cable transport system. In addition, this invention relates to a cable transport system comprising said analysis system.

### STATE OF THE ART

As known, both aerial and ground cable transport systems exist.

This invention is applicable to both types of cable transport.

In the cable transport systems currently known, the passengers are transported along a predefined path by means of a transport unit fed, one after another, between two terminal stations, also known as upstream and downstream stations, located at the ends of the transport system and wherein the passengers safely embark and disembark on/from the transport units.

In particular, the aerial cable transport systems are particularly useful when the contour of the underlying ground or other surrounding factors make travel across the ground impracticable. For example, said transport systems are used if the path to be crossed involves significant jumps in altitude with considerable inclines. Said path is typical of the ski/mountain town areas, wherein the aerial cable transport systems are called ski lifts. In any case, the aerial cable transport systems also find advantageous application in urban contexts where the ground transport is congested.

In particular, the term "aerial" means cable systems wherein the transport units are moved and/or supported by at least one cable in a raised position above the underlying ground or in relation to any other underlying structures.

By way of example, the transport systems may be chairlifts, in which each transport unit comprises a seat for each passenger, or cable cars, in which the transport units comprise a cabin.

The aerial cable transport systems currently known may be of the "single-cable" type, wherein the supporting cable also performs the function of hauling cable. Otherwise, they may be of the "dual-cable" or "tri-cable" type, wherein there are, respectively, one or two supporting cables in addition to the hauling cable.

As known, the hauling cable is sent in a circle and moved between the two terminal stations and, in the case of single-cable transport systems, the transport units comprise special devices (for example, clamps) for staying coupled to the cable at least in the section beyond the stations. Typically, in fact, in the terminal stations, the transport units unhook from the hauling cable to proceed at a lower speed so as to enable the safe disembarking and embarking of passengers, without slowing the transport units moving along the rest of the predefined path.

During operation, the cable transport system is typically subject to events limiting its operational efficiency, such as stops or reductions in speed of the hauling cable, owing, generally, to operator interventions or external factors, such as gusts of wind or drops in supply voltage or mechanical issues. By way of example, when a passenger falls in the embarking or disembarking zone of the transport system, the operator activates an emergency command, stopping the movement of the hauling cable.

To optimise the operation of cable transport systems, the causes of said events must be analysed so as to arrange counter-measures designed to prevent them. As examples, documents US 2018/162417 and US 2021/182563 disclose respective systems and methods for improving the operation of a cable transport system.

In any case, it is particularly complex to understand the causes of said events, since it is complicated for the operators of the transport system to precisely remember the times when said events occurred and to precisely reconstruct the causes of said events.

### SUMMARY OF THE INVENTION

One purpose of this invention is to provide an event analysis system for a cable transport system mitigating the drawbacks highlighted here in the prior art.

In accordance with this invention, an event analysis system for a cable transport system is provided, the analysis system comprising:
- a surveillance assembly comprising at least one optical acquisition unit configured to acquire images and/or videos of at least one portion of the cable transport system;
- a control unit, which is configured to control the operation of the cable transport system and to generate a notification signal indicative of a respective event affecting the operation of the cable transport system; and
- a correlation module, which is configured to receive the images and/or videos acquired by the surveillance assembly and the notification signal generated by the control unit and to correlate said images and/or videos to the respective event as a function of the notification signal received,
wherein the notification signal is indicative of a failure of the cable transport system or of a control command of the cable transport system given by an operator or by the control unit.

Thanks to this invention, it is possible to automatically create a connection between an event affecting the operation of the cable transport system and the images and/or videos acquired by the surveillance assembly.

In practice, by correlating the images and videos acquired during a certain event, it is possible to simply and quickly reconstruct the causes leading to said event.

An additional purpose of this invention is to provide a cable transport system mitigating the drawbacks in the prior art highlighted here.

In accordance with this invention, a cable transport system, preferably aerial, is provided comprising:
- a transport cable, which extends along a predefined path;
- at least one transport unit, which is hauled by the transport cable and is configured to transport passengers and/or objects along the predefined path; and
- an event analysis system as described above.

In this way, it is possible to accurately analyse the causes of said events so as to prepare counter-measures designed to prevent them, optimising the operation of the transport system.

An additional purpose of this invention is to provide an event analysis method for a cable transport system mitigating the drawbacks of the prior art highlighted here.

In accordance with this invention, an event analysis method for a cable transport system is provided, the analysis method comprising the steps of:
- acquiring images and/or videos of at least a portion of the cable transport system;
- controlling the operation of the cable transport system by means of a control unit;
- generating a notification signal indicative of a respective event affecting the operation of the cable transport system, wherein the notification signal is indicative of a failure of the cable transport system or of a control command of the cable transport system given by an operator or by the control unit; and
- correlating the acquired images and/or videos with the respective event as a function of the notification signal generated by means of a correlation module.

Thanks to this method, it is possible to make the analysis of the causes leading to said events simple, fast, and accurate.

### BRIEF DESCRIPTION OF THE DRAWINGS

Additional features and advantages of this invention are defined in the dependent claims and will be apparent from the following description of a non-limiting embodiment thereof, with reference to the accompanying drawings, wherein:
- Figure 1 is a schematic plan view of a portion of a cable transport system according to this invention; and
- Figure 2 is a block diagram of an event analysis system of the cable transport system in Figure 1.

### DETAILED DESCRIPTION OF THE INVENTION

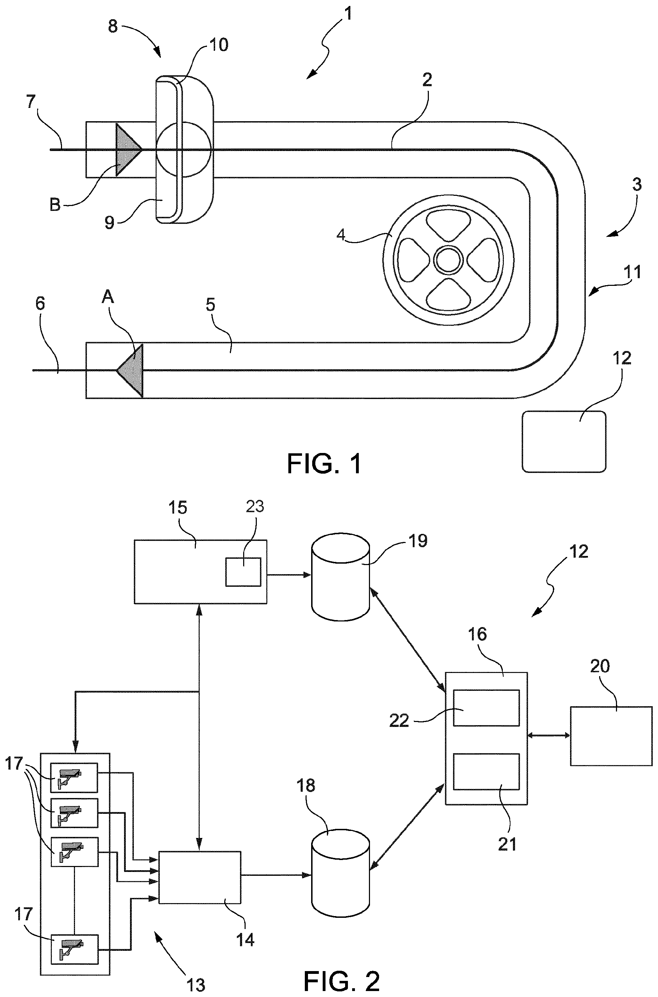

With reference to Figure 1, the reference number 1 denotes, by way of example and schematically, a portion of an aerial cable transport system.

It is understood that the invention concerns a generic cable transport system that may be an aerial or ground one, for example that moves on a track hauled by a cable.

In the case described and illustrated here, which does not limit this invention, the transport system 1 is a single-cable one and comprises a single cable 2 that performs the two-fold function of supporting cable and hauling cable.

In accordance with additional embodiments, not shown in the attached figures, the transport system 1 may be of the "dual-cable" and "tri-cable" type, wherein the transport system 1 also comprises one or two supporting cables in addition to the hauling cable.

The transport system 1 comprises a first terminal station or downstream station 3 and a second terminal station or upstream station, which is not shown in the attached figures. In particular, the downstream station 3 and the upstream station are provided with respective pulleys 4 (only the pulley of the downstream station 3 is visible in the attached figures), at least one of which is motorised.

The cable 2 is sent in a circle by means of the two pulleys 4 so as to identify a predefined path 5 comprising an uphill branch 6 and a downhill branch 7. The arrows A and B shown in Figure 1 indicate the forward directions of the ascent 6 and descent 7 branches.

The transport system 1 comprises at least one transport unit 8, which is moved and supported by the cable 2 and is configured to transport passengers along the predefined path 5.

In accordance with a variant of this invention, not shown in the attached figures, the transport unit 8 is configured to transport objects along the predefined path 5. More specifically, said objects may be goods or materials or any other object designed to be transported in the transport units 8, such as, for example, skis, or snowboards, or bicycles.

In accordance with another variant of this invention, not shown in the attached figures, the transport unit 8 is configured to transport both people and objects along the predefined path 5. For example, the transport unit 8 is configured to transport both people and skis or snowboards or bicycles.

In particular, the transport system 1 comprises multiple transport units 8, arranged one after the other along both the ascent 6 and descent 7 branches of the predefined path 5.

In the case described and illustrated here, which does not limit this invention, each transport unit 8 comprises a seat 9 for passengers and an anti-fall device 10, typically a safety bar that can be raised, to prevent the fall of passengers during their transport along the predefined path 5. In this configuration, the transport system 1 is called a chair lift.

In accordance with additional embodiments, not shown in the figures attached, each transport unit 8 can assume a wide range of different configurations. By way of example, each transport unit 8 may comprise a cabin for transporting passengers along the predefined path 5. In this configuration, the transport system 1 is called a cable car.

By way of another example, each transport unit 8 may comprise a container for transporting objects supported by a cable that performs the twofold function of supporting cable and hauling cable. This configuration is typical of "Blondin" transport systems.

Alternatively, the transport unit 8 may comprise an aerial conveyor belt for transporting objects between two terminal stations. In particular, said conveyor belt is supported by at least one supporting cable, which extends between the two terminal stations.

In the case described and illustrated here, the transport system 1 comprises at least one area 11 to be monitored.

In a preferred embodiment, the area 11 is arranged at the downstream and/or upstream station 3 and is an area for embarking and/or disembarking passengers in/from each transport unit 8.

In particular, the area 11 to be monitored comprises important and/or vital portions of the transport system 1.

More specifically, the transport system 1 may comprise multiple areas 11 to be monitored. By way of example, the transport system 1 comprises multiple areas 11 to be monitored, for example the embarking area and/or the disembarking area and/or the area of an intermediate station and/or an area comprising vital parts of the cable transport system, for example pulleys or other vital parts of the cable transport system.

In accordance with an additional embodiment of this invention, which is not shown in the attached figures, the transport system 1 comprises at least one intermediate station arranged between the downstream station 3 and the upstream station. In this configuration, the transport system 1 may comprise an additional area 11, arranged at said intermediate station.

In accordance with an alternative, non-limiting embodiment of this invention, which is not shown in the attached figures, the area 11 is configured to enable the loading/unloading of objects on each transport unit 8 or only on some transport units 8 of the multiple transport units 8.

In accordance with an additional, alternative embodiment, the area 11 is configured to enable the embarking and/or disembarking of passengers on the/from the transport units 8 and/or the loading/unloading of objects on the/from the transport units 8.

In accordance with this invention, the transport system 1 comprises an event analysis system 12.

With reference to Figure 2, the analysis system 12 comprises a surveillance assembly 13 comprising at least one optical acquisition unit 14 configured to acquire images and/or videos of at least one portion of the transport system 1; a control unit 15, which is configured to control the operation of the transport system 1 and to generate a notification signal indicative of a respective event affecting the operation of the transport system 1; and a correlation module 16, which is configured to receive the images and/or videos acquired by the surveillance assembly 13 and the notification signal generated by the control unit 15 and to correlate said images and/or said videos to the respective event as a function of the notification signal received.

In accordance with one, non-limiting embodiment of this invention, the surveillance assembly 13 is arranged in the area 11 (Figure 1) and comprises multiple video cameras 17 to acquire videos of the area 11. In this way, it is possible to acquire videos of the passenger embarking and/or disembarking stages on the/from the transport units 8 and/or to acquire videos of the object loading/unloading stages on the/from the transport units 8.

In accordance with an additional embodiment, which is not shown in the figures attached, the surveillance assembly 13 comprises multiple cameras to acquire images of the area 11.

It is understood that the video cameras 17 and/or cameras may be arranged at additional portions of the transport system 1 so as to acquire images and/or videos of the respective additional portions.

In the case described and illustrated here, the control unit 15 is configured to control the multiple video cameras 17, in particular as a function of each notification signal generated.

In accordance with one embodiment, which is not shown in the figures attached, the surveillance assembly 13 comprises the correlation module 16. In other words, the correlation module 16 is an integral part of the surveillance assembly 13.

In accordance with one alternative embodiment, not shown in the figures attached, the control unit 15 comprises the correlation module 16. In other words, the correlation module 16 is an integral part of the control unit 15.

In addition, the analysis system 12 comprises a memory 18 configured to store the images and/or videos acquired by the surveillance assembly 13. In particular, the memory 18 is configured to contain images and/or videos acquired by the surveillance assembly 13 during a certain time interval. Said time interval preferably ranges between 1 hour and 72 hours. In particular, said time interval ranges between 1 hour to 24 hours. More specifically, the memory 18 can be overwritten and the surveillance assembly 13 is configured to cyclically and/or continuously overwrite the memory 18 with new images and/or videos acquired.

The correlation module 16 is configured to extract images and/or videos from the memory 18 as a function of the notification signal received.

The analysis system 12 also comprises a memory 19 configured to store each notification signal generated by the control unit 15.

In particular, each notification signal indicates a time datum, in particular the notification signal comprises information relating to a time datum, which defines a time instant wherein the respective event occurred. More specifically, each time datum contains the date and time wherein the respective event occurred. In other words, each notification signal defines a respective time trigger signal.

By way of example, said event affecting the operation of the transport system 1 may be a stop or reduction in the speed of the hauling cable 2 owing to an operator's intervention or external factors, such as electrical or mechanical failures.

The correlation module 16 is configured to correlate the images and/or videos acquired by the surveillance assembly 13 with each notification signal at the time instant defined by the respective time datum. In particular, the correlation module 16 is configured to correlate each notification signal with images and/or videos acquired by the surveillance assembly 13 in a time interval straddling the time instant defined by the respective time datum. More specifically, the correlation module 16 is configured to couple each notification signal with images and/or videos acquired by the surveillance assembly 13 in a time interval ranging between the 10 seconds previous to and the 20 seconds following the time instant defined by the respective time datum. It is understood that said time interval can vary depending on the particular needs and can range between an hour previous to and an hour following the time instant defined by the respective time datum.

In one non-limiting embodiment of this invention, the control unit 15 comprises a notification module 23 configured to generate each notification signal. In particular, the notification module 23 is configured to generate a notification signal comprising information relating to the type of event and time instant of said event.

Said event may be defined by a control given by an operator and/or by a malfunction or anomaly detected by the control unit 15.

In addition, the notification signal is indicative of a failure of the transport system 1 or of control command of the transport system 1 given by an operator or by the control unit 15.

In other words, the notification module 23 is configured to generate notification signals comprising different information depending on the type of event affecting the operation of the transport system 1. By way of example, when an operator activates a stop command of the cable 2, the notification module 23 generates a notification signal comprising the information concerning the stop command activated by the operator. When the transport system 1 is subject to a mechanical failure, the notification module 23 generates a notification signal comprising information relating to the mechanical failure.

In accordance with one, non-limiting embodiment of this invention, the notification module 23 represents a software portion of the control unit 15. The notification module 23 is preferably defined by one or more lines of code that can be implemented by an electronic processor.

In accordance with an additional, non-limiting embodiment of this invention, the notification module 23 is a hardware component of the control unit 15.

In accordance with an additional, non-limiting embodiment of this invention, the notification module 23 is defined by a hardware component and/or software portion of the control unit 15.

In particular, the correlation module 16 comprises a memory 22 and is configured to couple images and/or videos to the respective notification signal and to store the images and/or the videos coupled to the respective notification signal in the memory 22.

More specifically, the correlation module 16 is configured to generate a list of notification signals and correlated images and/or videos and to store said list in the memory 22, wherein each notification signal is coupled with respective images and/or videos. Said list is preferably in a matrix form.

In accordance with an alternative embodiment, which is not shown in the attached figures, the analysis system 12 is provided with a single memory assembly comprising the memories 18, 19, and 22.

In addition, the analysis system 12 comprises a user interface 20 configured to communicate with the correlation module 16 and to display each notification signal and the respective correlated images and/or the respective correlated videos.

In particular, the user interface 20 comprises a screen, not shown in the attached figures, on which the list of notification signals and the images and/or videos coupled to each notification signal of the list of notification signals can be displayed.

In accordance with one embodiment, the correlation module 16 comprises an artificial intelligence unit 21 configured to analyse the images and/or the videos correlated to each notification signal and to classify each notification signal as a function of said analysis. In particular, the artificial intelligence unit 21 is configured to classify the events into different types, depending on the images and/or videos acquired by the surveillance assembly 13.

By way of example, when an operator activates the stop command of the cable 2, the artificial intelligence unit 21 is configured to classify a first event, which, for example, corresponds to the fall of a passenger from the seat 9 in the area 11, differently to a second event, which, for example, corresponds to an incorrect ascent of a passenger into the seat 9 in the area 11.

In accordance with one, non-limiting embodiment of this invention, the artificial intelligence unit 21 comprises neural networks configured to be trained to recognise the different types of events as a function of images and/or videos. More specifically, the training of the artificial intelligence unit 21 involves providing as input multiple images and/or videos of events that occurred in one portion of the transport system 1 and to manually assign a parameter indicating the type of event to each image and/or to each video.

In use, and with reference to Figure 2, when an event occurs affecting the operation of the transport system 1, the notification module 23 generates a notification signal indicating said event and stores said notification signal in the memory 19. In particular, the notification signal stored in the memory 19 indicates a time datum and event type.

By way of example, when a passenger falls from the seat 9 in the area 11, an operator of the transport system 1 activates an emergency stop command so as to stop the cable 2. In this circumstance, the notification module 23 generates a notification signal containing information relating to the date and time of said stop ad to the fact that the stop command was activated.

During the operation of the transport system 1, the optical acquisition unit 14 continuously acquires images and/or videos of a portion of the transport system 1 and stores the images acquired and/or videos acquired in the memory 18. By way of example, the video cameras 17 acquire videos of the area 11 of the transport system 1.

In accordance with this invention, the correlation module 16 correlates the images and/or videos acquired by the optical acquisition unit 14 with the corresponding event as a function of the notification signal generated by the control unit 15. In particular, the correlation module 16 correlates images and/or videos acquired by the optical acquisition unit 14 on the date and at the time of said notification signal with each notification signal.

In accordance with one non-limiting embodiment of this invention, the correlation module 16 generates a list of notification signal correlated to respective images and/or videos acquired by the surveillance assembly 13.

For the purpose of analysing the operation of the transport system 1, an operator displays said list of notification signals and the corresponding, correlated images and/or videos on a user interface 20, such as, for example, a screen.

It is, finally, apparent that variations can be made to this invention without departing from the scope of the appended claims.

## Claims

1. An event analysis system for a cable transport system, the analysis system (12) comprising:
- a surveillance assembly (13) comprising at least one optical acquisition unit (14) configured to acquire images and/or videos of at least one portion of the cable transport system (1);
- a control unit (15), which is configured to control the operation of the cable transport system (1) and to generate a notification signal indicative of a respective event affecting the operation of the cable transport system (1); **characterised in that** the event analysis system further comprises
- a correlation module (16), which is configured to receive the images and/or the videos acquired by the surveillance assembly (13) and the notification signal generated by the control unit (15) and to correlate said images and/or said videos to the respective event as a function of the received notification signal,
wherein the notification signal is indicative of a failure of the cable transport system (1) or of a control command of the cable transport system (1) given by an operator or by the control unit (15).

2. The analysis system as claimed in claim 1, wherein the notification signal is indicative of a time datum, which defines a time instant at which the respective event occurred; the correlation module (16) being configured to correlate to each notification signal the images and/or the videos acquired by the surveillance assembly (13) at the time instant defined by the respective time datum.

3. The analysis system as claimed in any one of the foregoing claims, wherein the correlation module (16) is comprised in the surveillance assembly (13) or in the control unit (15); preferably the surveillance assembly (13) being configured to be placed at an area (11) for embarking/disembarking passengers and/or for loading/unloading objects of the cable transport system (1) and comprises at least one camera and/or at least one video camera (17) for capturing images and/or video of said area (11).

4. The analysis system as claimed in any one of the foregoing claims, and comprising a first memory (18) configured to store the images and/or the video acquired by the surveillance assembly (13); the correlation module (16) being configured to extract images and/or video from the first memory (18) as a function of the received notification signal; preferably the analysis system comprising a second memory (19) configured to store each notification signal generated by the control unit (15).

5. The analysis system as claimed in any one of the foregoing claims, wherein the correlation module (16) comprises a third memory (22) and is configured to couple images and/or videos to the respective notification signal and to store in the third memory (22) the images and/or the videos coupled to the respective notification signal.

6. The analysis system as claimed in any one of the foregoing claims, and comprising a user interface (20) configured to communicate with the correlation module (16) and to display each notification signal and the respective correlated images and/or the respective correlated videos; preferably the correlation module (16) being configured to generate a list of notification signals, wherein each notification signal is coupled to respective images and/or respective videos; preferably the user interface (20) comprising a screen on which the list of notification signals and the images and/or the videos coupled to each notification signal of the list of notification signals can be displayed.

7. The analysis system as claimed in any one of the foregoing claims, wherein the correlation module (16) comprises an artificial intelligence unit (21) configured to analyse the images and/or the videos correlated to each notification signal and to classify each notification signal as a function of said analysis.

8. A cable transport system, preferably aerial, comprising:
- a transport cable (2), which extends along a predefined path (5);
- at least one transport unit (8), which is supported by the transport cable (2) and is configured to transport passengers and/or objects along the predefined path (5); and
- an event analysis system (12) as claimed in any one of the foregoing claims.

9. An event analysis method for a cable transport system, the analysis method comprising the steps of:
- acquiring images and/or videos of at least a portion of the cable transport system (1);
- controlling the operation of the cable transport system (1) by means of a control unit (15);
- generating a notification signal indicative of a respective event affecting the operation of the cable transport system (1), wherein the notification signal is indicative of a failure of the cable transport system (1) or of a control command of the cable transport system (1) given by an operator or by the control unit (15); and
- correlating the acquired images and/or the acquired videos to the respective event as a function of the generated notification signal by means of a correlation module (16).

10. The analysis method as claimed in claim 9, wherein the notification signal is indicative of a time datum, which defines a time instant at which the respective event occurred; the analysis method comprising the step of correlating to each notification signal the images and/or videos acquired by the surveillance assembly (13) at the time instant defined by the respective time datum.

11. The analysis method as claimed in claim 9 or 10, and comprising the steps of storing the images and/or the video acquired by the surveillance assembly (13) in a first memory (18); and extracting images and/or video from the first memory (18) as a function of the received notification signal; preferably the analysis method comprising the step of coupling images and/or videos to the respective notification signal and storing the images and/or videos coupled to the respective notification signal.

12. The analysis method as claimed in any one of claims 9 to 11, and comprising the step of displaying on a user interface (20) each notification signal and respective correlated images and/or the respective correlated videos.

13. The analysis method as claimed in any one of claims 9 to 12, and comprising the steps of analysing the images and/or the videos correlated to each notification signal by means of an artificial intelligence unit (21); and classifying each notification signal as a function of the performed analysis.

14. A computer program configured to control an event analysis system (12) for a cable transport system and directly loadable into a memory of a control unit to carry out the method steps of any one of claims 9 to 13 when the program is implemented by the control unit.

15. A program product comprising a readable medium on which the program of claim 14 is stored.

## Patentansprüche

1. Ereignisanalysesystem für ein Seiltransportsystem, wobei das Analysesystem (12) umfasst:
- eine Überwachungsanordnung (13), die zumindest eine optische Aufnahmeeinheit (14) umfasst, die konfiguriert ist, Bilder und/oder Videos von zumindest einem Abschnitt des Seiltransportsystems (1) aufzunehmen;
- eine Steuer- bzw. Regeleinheit (15), die konfiguriert ist, den Betrieb des Seiltransportsystems (1) zu steuern bzw. zu regeln und ein Benachrichtigungssignal zu generieren, das ein jeweiliges Ereignis angibt, das den Betrieb des Seiltransportsystems (1) beeinträchtigt;
**dadurch gekennzeichnet, dass** das Ereignisanalysesystem ferner umfasst:
- ein Korrelationsmodul (16), das konfiguriert ist, die von der Überwachungsanordnung (13) aufgenommenen Bilder und/oder Videos und das von der Steuer- bzw. Regeleinheit (15) generierte Benachrichtigungssignal zu empfangen und die Bilder und/oder Videos in Abhängigkeit von dem empfangenen Benachrichtigungssignal mit dem jeweiligen Ereignis zu korrelieren,
wobei das Benachrichtigungssignal einen Fehler bzw. Ausfall des Seiltransportsystems (1) oder einen von einer Bedienperson oder der Steuer- bzw. Regeleinheit (15) erteilten Steuer- bzw. Regelbefehl für das Seiltransportsystem (1) angibt.

2. Analysesystem nach Anspruch 1, wobei das Benachrichtigungssignal ein Zeitdatum angibt, das einen Zeitpunkt definiert, an dem das jeweilige Ereignis auftrat; wobei das Korrelationsmodul (16) konfiguriert ist, die von der Überwachungsanordnung (13) zu dem durch das jeweilige Zeitdatum definierten Zeitpunkt aufgenommenen Bilder und/oder Videos mit jedem Benachrichtigungssignal zu korrelieren.

3. Analysesystem nach einem der vorhergehenden Ansprüche, wobei das Korrelationsmodul (16) in der Überwachungsanordnung (13) oder in der Steuer- bzw. Regeleinheit (15) umfasst bzw. enthalten ist; wobei vorzugsweise die Überwachungsanordnung (13) konfiguriert ist, an einem Bereich (11) zum Einsteigen/Aussteigen von Passagieren und/oder zum Beladen/Entladen von Objekten des Seiltransportsystems (1) platziert zu werden und zumindest eine Kamera und/oder zumindest eine Videokamera (17) zum Erfassen von Bildern und/oder Videos dieses Bereichs (11) umfasst.

4. Analysesystem nach einem der vorhergehenden Ansprüche und umfassend einen ersten Speicher (18), der konfiguriert ist, die von der Überwachungsanordnung (13) aufgenommenen Bilder und/oder Videos zu speichern; wobei das Korrelationsmodul (16) konfiguriert ist, Bilder und/oder Videos aus dem ersten Speicher (18) in Abhängigkeit von dem empfangenen Benachrichtigungssignal zu extrahieren; wobei vorzugsweise das Analysesystem einen zweiten Speicher (19) umfasst, der konfiguriert ist, jedes von der Steuer- bzw. Regeleinheit (15) generierte Benachrichtigungssignal zu speichern.

5. Analysesystem nach einem der vorhergehenden Ansprüche, wobei das Korrelationsmodul (16) einen dritten Speicher (22) umfasst und konfiguriert ist, Bilder und/oder Videos mit dem jeweiligen Benachrichtigungssignal zu koppeln und die mit dem jeweiligen Benachrichtigungssignal gekoppelten Bilder und/oder Videos in dem dritten Speicher (22) zu speichern.

6. Analysesystem nach einem der vorhergehenden Ansprüche und umfassend eine Benutzerschnittstelle bzw. -oberfläche (20), die konfiguriert ist, mit dem Korrelationsmodul (16) zu kommunizieren und jedes Benachrichtigungssignal und die jeweiligen korrelierten Bilder und/oder Videos anzuzeigen; wobei das Korrelationsmodul (16) vorzugsweise konfiguriert ist, eine Liste von Benachrichtigungssignalen zu generieren, wobei jedes Benachrichtigungssignal mit jeweiligen Bildern und/oder Videos gekoppelt ist; wobei vorzugsweise die Benutzeroberfläche (20) einen Bildschirm umfasst, auf dem die Liste von Benachrichtigungssignalen und die mit jedem Benachrichtigungssignal gekoppelten Bilder und/oder Videos angezeigt werden können.

7. Analysesystem nach einem der vorhergehenden Ansprüche, wobei das Korrelationsmodul (16) eine Künstliche-Intelligenz-Einheit (21) umfasst, die konfiguriert ist, die mit jedem Benachrichtigungssignal korrelierten Bilder und/oder Videos zu analysieren und jedes Benachrichtigungssignal in Abhängigkeit von der Analyse zu klassifizieren.

8. Seiltransportsystem, vorzugsweise Luftseiltransportsystem, umfassend:
- ein Transportseil (2), das sich entlang eines vordefinierten Wegs (5) erstreckt;
- zumindest eine Transporteinheit (8), die durch das Transportseil (2) getragen und konfiguriert ist, Passagiere und/oder Objekte entlang des vordefinierten Wegs (5) zu transportieren; und
- ein Ereignisanalysesystem (12) nach einem der vorhergehenden Ansprüche.

9. Ereignisanalyseverfahren für ein Seiltransportsystem, wobei das Analyseverfahren die Schritte umfasst:
- Aufnehmen von Bildern und/oder Videos von zumindest einem Abschnitt des Seiltransportsystems (1);
- Steuern bzw. Regeln des Betriebs des Seiltransportsystems (1) mittels einer Steuer- bzw. Regeleinheit (15);
- Generieren eines Benachrichtigungssignals, das ein jeweiliges Ereignis angibt, das den Betrieb des Seiltransportsystems (1) beeinträchtigt, wobei das Benachrichtigungssignal einen Fehler bzw. Ausfall des Seiltransportsystems (1) oder einen von einer Bedienperson oder der Steuer- bzw. Regeleinheit (15) erteilten Steuer- bzw. Regelbefehl für das Seiltransportsystem (1) angibt; und
- Korrelieren der aufgenommenen Bilder und/oder der aufgenommenen Videos mit dem jeweiligen Ereignis in Abhängigkeit von dem generierten Benachrichtigungssignal mittels eines Korrelationsmoduls (16).

10. Analyseverfahren nach Anspruch 9, wobei das Benachrichtigungssignal ein Zeitdatum angibt, das einen Zeitpunkt definiert, an dem das jeweilige Ereignis auftrat; wobei das Analyseverfahren den Schritt des Korrelierens der von der Überwachungsanordnung (13) zu dem durch das jeweilige Zeitdatum definierten Zeitpunkt aufgenommenen Bilder und/oder Videos mit jedem Benachrichtigungssignal umfasst.

11. Analyseverfahren nach Anspruch 9 oder 10 und umfassend die Schritte des Speicherns der von der Überwachungsanordnung (13) aufgenommenen Bilder und/oder Videos in einem ersten Speicher (18); und des Extrahierens von Bildern und/oder Videos aus dem ersten Speicher (18) in Abhängigkeit von dem empfangenen Benachrichtigungssignal; wobei vorzugsweise das Analyseverfahren den Schritt des Koppelns von Bildern und/oder Videos mit dem jeweiligen Benachrichtigungssignal und des Speicherns der mit dem jeweiligen Benachrichtigungssignal gekoppelten Bilder und/oder Videos umfasst.

12. Analyseverfahren nach einem der Ansprüche 9 bis 11 und umfassend den Schritt des Anzeigens, auf einer Benutzeroberfläche (20), jedes Benachrichtigungssignals und jeweiliger korrelierter Bilder und/oder der jeweiligen korrelierten Videos.

13. Analyseverfahren nach einem der Ansprüche 9 bis 12 und umfassend die Schritte des Analysierens der mit jedem Benachrichtigungssignal korrelierten Bilder und/oder Videos mittels einer Künstliche-Intelligenz-Einheit (21); und des Klassifizierens jedes Benachrichtigungssignals in Abhängigkeit von der durchgeführten Analyse.

14. Computerprogramm, das konfiguriert ist, ein Ereignisanalysesystem (12) für ein Seiltransportsystem zu steuern bzw. zu regeln, und das direkt in einen Speicher einer Steuer- bzw. Regeleinheit ladbar ist, um die Verfahrensschritte nach einem der Ansprüche 9 bis 13 auszuführen, wenn das Programm von der Steuer- bzw. Regeleinheit implementiert wird.

15. Programmprodukt, umfassend ein lesbares Medium, auf dem das Programm nach Anspruch 14 gespeichert ist.

## Revendications

1. Système d'analyse d'événement pour un système de transport par câble, le système d'analyse (12) comprenant :
- un ensemble de surveillance (13) comprenant au moins une unité d'acquisition optique (14) configurée pour acquérir des images et/ou des vidéos d'au moins une partie du système de transport par câble (1) ;
- une unité de commande (15), qui est configurée pour commander le fonctionnement du système de transport par câble (1) et pour générer un signal de notification indicatif d'un événement respectif affectant le fonctionnement du système de transport par câble (1) ;
**caractérisé en ce que** le système d'analyse d'événement comprend en outre
- un module de corrélation (16), qui est configuré pour recevoir les images et/ou les vidéos acquises par l'ensemble de surveillance (13), et le signal de notification généré par l'unité de commande (15) et pour corréler lesdites images et/ou lesdites vidéos à l'événement respectif en fonction du signal de notification reçu,
dans lequel le signal de notification est indicatif d'une défaillance du système de transport par câble (1) ou d'une instruction de commande du système de transport par câble (1) donnée par un opérateur ou par l'unité de commande (15).

2. Système d'analyse selon la revendication 1, dans lequel le signal de notification est indicatif d'une donnée temporelle, qui définit un instant auquel l'événement respectif s'est produit; le module de corrélation (16) étant configuré pour corréler, à chaque signal de notification, les images et/ou les vidéos acquises par l'ensemble de surveillance (13) à l'instant défini par la donnée temporelle respective.

3. Système d'analyse selon l'une quelconque des revendications précédentes, dans lequel le module de corrélation (16) est compris dans l'ensemble de surveillance (13) ou dans l'unité de commande (15) ; de préférence, l'ensemble de surveillance (13) étant configuré pour être placé dans une zone (11) destinée à l'embarquement/au débarquement de passagers et/ou au chargement/déchargement d'objets du système de transport par câble (1) et comprenant au moins un appareil photo et/ou au moins une caméra vidéo (17) pour capturer des images et/ou des vidéos de ladite zone (11).

4. Système d'analyse selon l'une quelconque des revendications précédentes, comprenant une première mémoire (18) configurée pour stocker les images et/ou la vidéo acquises par l'ensemble de surveillance (13) ; le module de corrélation (16) étant configuré pour extraire des images et/ou des vidéos de la première mémoire (18) en fonction du signal de notification reçu ; de préférence, le système d'analyse comprenant une deuxième mémoire (19) configurée pour stocker chaque signal de notification généré par l'unité de commande (15).

5. Système d'analyse selon l'une quelconque des revendications précédentes, dans lequel le module de corrélation (16) comprend une troisième mémoire (22) et est configuré pour coupler des images et/ou des vidéos au signal de notification respectif et pour stocker, dans la troisième mémoire (22), les images et/ou les vidéos couplées au signal de notification respectif.

6. Système d'analyse selon l'une quelconque des revendications précédentes, comprenant une interface utilisateur (20) configurée pour communiquer avec le module de corrélation (16) et pour afficher chaque signal de notification et les images corrélées respectives et/ou les vidéos corrélées respectives ; de préférence, le module de corrélation (16) étant configuré pour générer une liste de signaux de notification, dans lequel chaque signal de notification est couplé à des images respectives et/ou à des vidéos respectives ; de préférence, l'interface utilisateur (20) comprenant un écran sur lequel la liste de signaux de notification et les images et/ou les vidéos couplées à chaque signal de notification de la liste de signaux de notification peuvent être affichées.

7. Système d'analyse selon l'une quelconque des revendications précédentes, dans lequel le module de corrélation (16) comprend une unité d'intelligence artificielle (21) configurée pour analyser les images et/ou les vidéos corrélées à chaque signal de notification et pour classer chaque signal de notification en fonction de ladite analyse.

8. Système de transport par câble, de préférence aérien, comprenant :
- un câble de transport (2), qui s'étend le long d'un trajet prédéfini (5) ;
- au moins une unité de transport (8), qui est supportée par le câble de transport (2) et est configurée pour transporter des passagers et/ou des objets le long du trajet prédéfini (5) ; et
- un système d'analyse d'événement (12) selon l'une quelconque des revendications précédentes.

9. Procédé d'analyse d'événement pour un système de transport par câble, le procédé d'analyse comprenant les étapes comprenant le fait de :
- acquérir des images et/ou des vidéos d'au moins une partie du système de transport par câble (1) ;
- commander le fonctionnement du système de transport par câble (1) au moyen d'une unité de commande (15) ;
- générer un signal de notification indicatif d'un événement respectif affectant le fonctionnement du système de transport par câble (1), dans lequel le signal de notification est indicatif d'une défaillance du système de transport par câble (1) ou d'une instruction de commande du système de transport par câble (1) donnée par un opérateur ou par l'unité de commande (15) ; et
- corréler les images acquises et/ou les vidéos acquises, à l'événement respectif, en fonction du signal de notification généré, au moyen d'un module de corrélation (16).

10. Procédé d'analyse selon la revendication 9, dans lequel le signal de notification est indicatif d'une donnée temporelle, qui définit un instant auquel l'événement respectif s'est produit ; le procédé d'analyse comprenant l'étape de corrélation, à chaque signal de notification, des images et/ou des vidéos acquises par l'ensemble de surveillance (13), à l'instant défini par la donnée temporelle respective.

11. Procédé d'analyse selon la revendication 9 ou 10, comprenant les étapes de stockage des images et/ou des vidéos acquises par l'ensemble de surveillance (13), dans une première mémoire (18), et d'extraction d'images et/ou de vidéos de la première mémoire (18), en fonction du signal de notification reçu ; de préférence, le procédé d'analyse comprenant les étapes de couplage d'images et/ou de vidéos au signal de notification respectif et de stockage des images et/ou des vidéos couplées au signal de notification respectif.

12. Procédé d'analyse selon l'une quelconque des revendications 9 à 11, comprenant l'étape d'affichage, sur une interface utilisateur (20), de chaque signal de notification et des images et/ou vidéos corrélées respectives.

13. Procédé d'analyse selon l'une quelconque des revendications 9 à 12, comprenant les étapes d'analyse des images et/ou des vidéos corrélées à chaque signal de notification, au moyen d'une unité d'intelligence artificielle (21), et de classement de chaque signal de notification en fonction de l'analyse effectuée.

14. Programme informatique, configuré pour commander un système d'analyse d'événement (12) pour un système de transport par câble, lequel programme peut être chargé directement dans une mémoire d'une unité de commande pour exécuter les étapes de procédé selon l'une quelconque des revendications 9 à 13, lorsque le programme est mis en œuvre par l'unité de commande.

15. Produit-programme informatique comprenant un support lisible sur lequel est stocké le programme selon la revendication 14.
